# EUROPEAN PATENT APPLICATION

(11) **EP 2 050 627 A1**
(43) Date of publication of application: **22.04.2009**
(21) Application number: 07743054.4
(22) Date of filing: 09.05.2007
(51) Int. Cl.: B60R 21/20, B60N 2/42, B60R 21/16, B60R 21/26

(54) **SEAT-MOUNTED OCCUPANT RESTRAINT APPARATUS**

(30) Priority: 07.08.2006 JP 2006214942
(71) Applicant: Takata Corporation, Tokyo 106-8510 (JP)
(72) Inventor: SUGIMOTO, Shinichi, Tokyo 106-8510 (JP); TAKEDOMI, Akifumi, Tokyo 106-8510 (JP)
(74) Representative: Heunemann, Dieter
(86) International application number: PCT/JP2007/059619
(87) International publication number: WO 2008/018217

(57) **Abstract**

[Object] To provide a seat-mounted occupant restraining apparatus with which it becomes possible to set so that pressurized fluid is supplied in accordance with priority to a plurality of airbags extending to substantially peripheral portions of an occupant when inflated, and a gas supply means for supplying in common the pressurized fluid is enabled to be simplified.

[Solving Means] A seat-mounted occupant restraining apparatus includes a backrest portion 1B, a pair of side airbags 11a, 11b each provided in the backrest portion 1B so as to extend to the side portions of an occupant 2 when inflated, an inflator 13 for supplying gas in common to the plurality of side airbags 11a, 11b, and gas supply holes 15a, 15b, which set the priority of gas supply to the plurality of side airbags 11a, 11b via the inflator 13.

## Description

### Technical Field

The present invention relates to a seat-mounted occupant restraining apparatus provided with an airbag and mounted on a vehicle such as an automobile.

### Background Art

Hitherto, there have been used various types of airbag devices, which each serve to restrain the body of an occupant in an event of a vehicle collision or the like, such as a driver airbag device that is inflated and extends to the side of a driver from the rotation center of a steering wheel in a driver seat, a passenger airbag that is inflated and extends to the side of a passenger seat from an instrument panel, and the like.

In recent years, side airbags have been proposed that are applicable to a possible case such that an occupant suffers an impact on his/her waist portion or the side portion of his/her breast portion due to a shock of an eventual big accident, which applies a large force to an automobile, such as a lateral overturn of a vehicle body caused by a collision or the like (for example, refer to Patent Document 1 and Patent Document 2).
[Patent Document 1] Japanese Unexamined Patent Application Publication No. H07-267037
[Patent Document 2] Japanese Unexamined Patent Application Publication No. H07-267038

### Disclosure of Invention

### Problems to be Solved by the Invention

Side airbags according to the above prior art are disposed on the both sides of a driver seat and a passenger seat, i.e., on the outer side (door side) and on the side facing the adjacent seat (inner side) of each of the driver seat and the passenger seat so as to be inflated out in correspondence to the waist portion, the head portion and the breast portion of an occupant, and these side airbags are configured so as to be inflated in predetermined shape and size, respectively, by inflators provided individually on both sides of the seat.

Furthermore, a configuration of the side airbags is disclosed that a side airbag on one side (outer side) absorbs an inertial force applied to an occupant, and also prevents a secondary collision of the occupant to the sidewall side of the vehicle body, while another side airbag on the other side (inner side) is inflated with a delay relative to the side airbag on the outer side to prevent the occupant from coming into tertiary collision with decorative goods in the vehicle cabin, and thereby the impact due to the tertiary collision is caused to be effectively absorbed.

Incidentally, the above airbag device has had a problem that its electrical and mechanical configuration becomes complicated, since the inner side airbag and the outer side airbag provided individually independently on both sides of the respective seats are configured so as to be inflated in predetermined shape and size, respectively, by inflators provided individually in correspondence thereto, while sensors respectively outputting an inflating-out signal at a delayed timing to each of the side airbags.

An object of the present invention is to provide a seat-mounted occupant restraining apparatus with which it becomes possible to set so that pressurized fluid is supplied in accordance with priority to a plurality of airbags extending to substantially peripheral portions of an occupant when inflated, and a gas supply means for supplying in common the pressurized fluid is enabled to be simplified. Means for Solving the Problems

In order to achieve the above object, the first invention is characterized in including a backrest portion, a plurality of airbags each provided in the backrest portion so as to extend at least to substantially peripheral portions of an occupant when inflated, the peripheral portions including at least side portions of an occupant, a gas supply means for supplying pressurized fluid in common to the plurality of airbags, and a supply priority setting means for setting priorities for supplying the pressurized fluid to the plurality of airbags through the gas supply means.

The pressurized fluid is supplied via the gas supply means to the first airbag, to which a supply priority has been set, of the plurality of airbags extending at least to substantially peripheral portions of the occupant when inflated, and causes the first airbag to start to be inflated in the backrest portion; then, the first airbag pushes a ruptured portion of the backrest portion to rupture. And, the pressurized fluid is supplied sequentially to the airbags in accordance with the priority via the gas supply means to allow the airbags to be inflated to the outside of the backrest portion and to extend to substantially peripheral portions such as the side portions, the above, or the like of the occupant.

The present invention enables the above gas supply means to be simplified, since the pressurized fluid is supplied to the plurality of airbags by the gas supply means for supplying the pressurized fluid in common, which extend to substantially peripheral portions of the occupant when inflated, in accordance with the priority set by the supply priority setting means.

The second invention is characterized in that, in the first invention, the gas supply means is provided with one inflator, and an introduction tube passage for introducing the pressurized fluid from this inflator to the plurality of airbags.

When the one inflator is activated, the plurality of airbags are inflated sequentially in a desired configuration with the pressurized fluid introduced by the introduction tube passage in accordance with the priority. With this, the plurality of airbags are enabled to be inflated and extend sequentially to substantially peripheral portions of the occupant by the one inflator in accordance with the priority.

The third invention is characterized in that, in the second invention, the introduction tube passage is substantially U-shaped.

With this, the introduction tube passage can also serve as a strength support member for the backrest portion by being accommodated together with the plurality of airbags in the backrest portion of a seat.

The fourth invention is characterized in that, in the second or third invention, the introduction tube passage is a check valve provided in the introduction tube passage.

With this, it becomes possible to allow the airbag located in the downstream side of the check valve provided in the introduction tube passage to be pressurized higher than the airbag located in the upstream side, and the pressurized fluid supplied from the one inflator can be introduced to plurality of airbags with having a difference in internal pressure.

The fifth invention is characterized in that, in the second or third invention, the introduction tube passage is a throttling means provided in the introduction tube passage.

With this, it becomes possible to allow the throttling means provided in the introduction tube passage between the plurality of airbags to regulate the flow quantity of the pressurized fluid in accordance with the priority with a simple configuration only having a tube passage having a different diameter.

The sixth invention is characterized in that, in the second or third invention, the supply priority setting means is a plurality of opening portions, the number or size of each of which is different to each other so as to regulate the supply quantity of the pressurized fluid for each of the plurality of airbags, the opening portions being provided in the introduction tube passage in correspondence to the respective airbags.

With this, the plurality of opening portions provided in the introduction tube passage in correspondence to the respective airbags can regulate the flow quantity with a simple configuration such that the numbers or sizes thereof are different to each other according to the priority. Advantages

According to the present invention, it becomes possible to set so that pressurized fluid is supplied in accordance with priority to a plurality of airbags extending to substantially peripheral portions of an occupant when inflated, and a gas supply means for supplying in common the pressurized fluid is enabled to be simplified.

### Brief Description of Drawings

[Fig. 1] Fig. 1 is a perspective view of a seat-mounted occupant restraining apparatus according to an embodiment of the present invention.
[Fig. 2] Fig. 2 is an elevation view of a seat accommodating an airbag device in its backrest portion.
[Fig. 3] Fig. 3 is a side view showing a state that an occupant is seated on the seat.
[Fig. 4] Fig. 4 is an elevation view of an airbag device provided with a check valve in the introduction tube passage.
[Fig. 5] Fig. 5 is a cross-section view taken from A-A of Fig. 4.
[Fig. 6] Fig. 6 is an exploded perspective view showing a mounting structure of a side airbag with respect to a mounting portion on one side of the introduction tube passage provided with orifices.
[Fig. 7] Fig. 7 is a perspective view of the introduction tube passage provided with gas supply holes in its both end portions, the gas supply holes each serving as a supply priority setting means.
[Figs. 8] Figs. 8 show a seat-mounted occupant restraining apparatus according to another embodiment of the present invention; Fig. 8(a) is an elevation view of an airbag device having three airbags mounted to the introduction tube passage, and Fig. 8(b) is an elevation view of the introduction tube passage in which gas supply holes are formed to be different in number according to priority corresponding to the three airbags.

### Reference Numerals

- 1: seat
- 1B: backrest portion
- 1C: headrest
- 2: occupant
- 10: airbag device
- 11: airbag
- 11a,: 11b, 11c side airbag
- 12: introduction tube passage (gas supply means)
- 13: inflator (gas supply means)
- 15a, 15b, 15c: gas supply hole (supply priority setting means)
- CV: check valve (supply priority setting means)
- MV: throttle valve (throttling means, supply priority setting means)
- OF: opening portion

### Best Modes for Carrying Out the Invention

A first embodiment of the present invention will be described below with reference to the attached drawings.

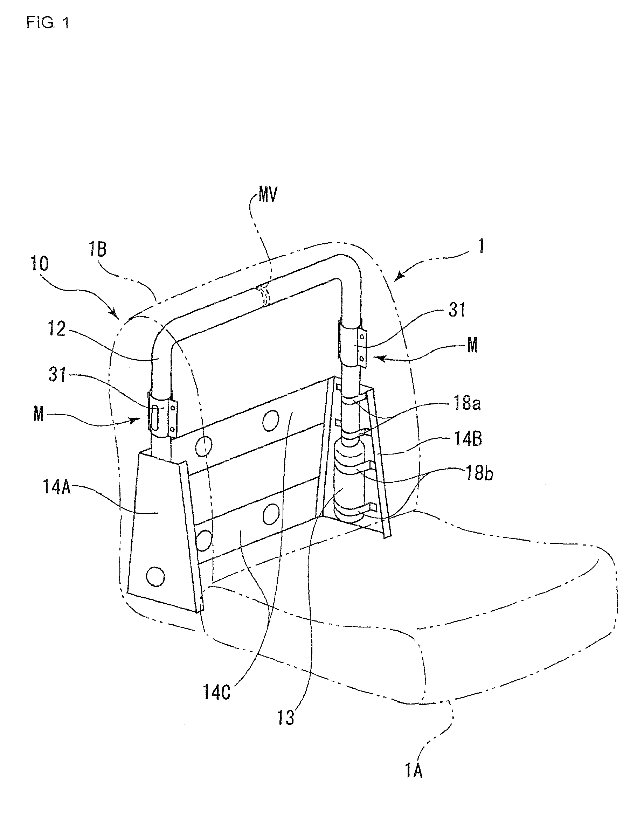

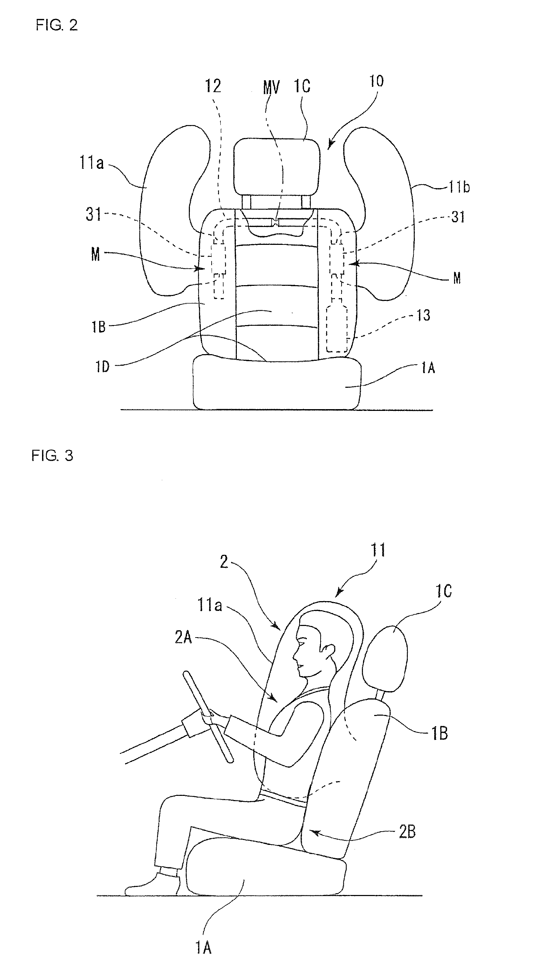

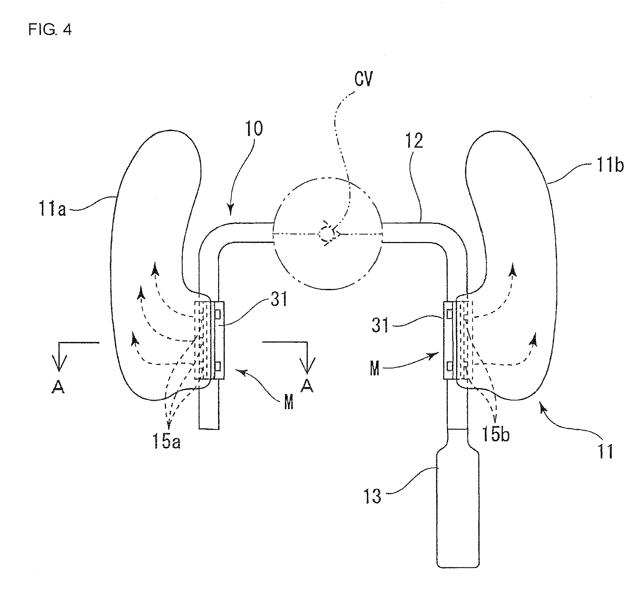

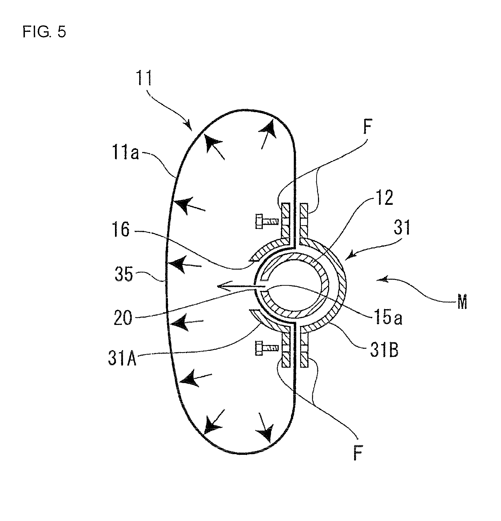

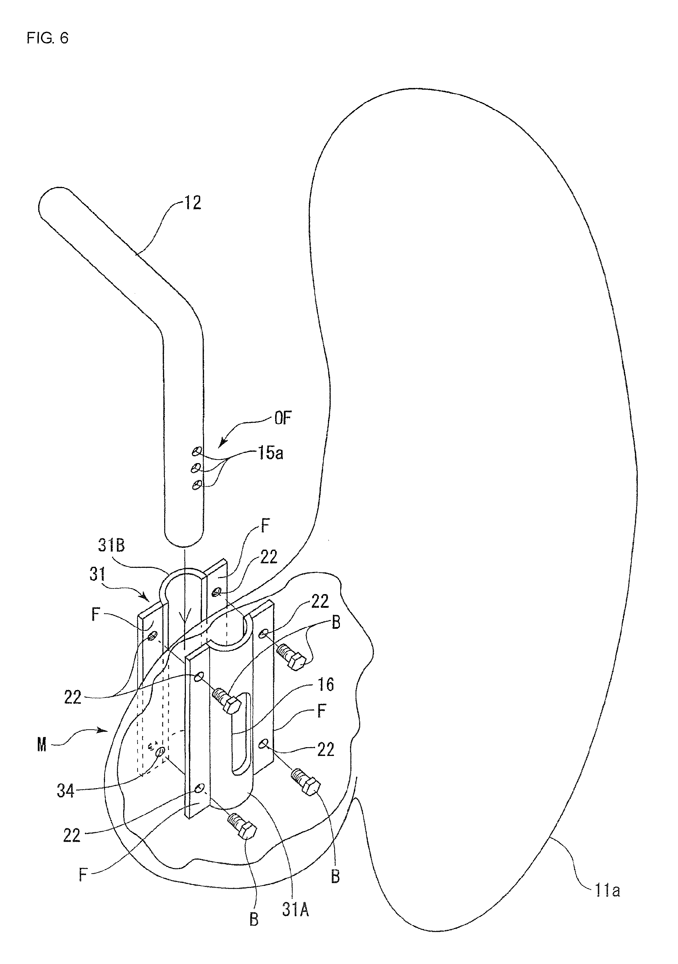

Fig. 1 is a perspective view of a seat-mounted occupant restraining apparatus according to an embodiment of the present invention, Fig. 2 is an elevation view of a seat accommodating an airbag device in its backrest portion, Fig. 3 is a side view showing a state that an occupant is seated on the seat, Fig. 4 is an elevation view of an airbag device provided with a check valve in the introduction tube passage, Fig. 5 is a cross-section view taken from A-A of Fig. 4, and Fig. 6 is an exploded perspective view showing a mounting structure of a side airbag with respect to a mounting portion on one side (sidewall side of the vehicle body) of the introduction tube passage provided with orifices.

In Fig. 1, no airbag is shown to avoid complexity of illustration. It is noted that, in the following, "forward" denotes a direction which an occupant 2 seated on a seat faces (for example, the front of an automobile), and "rearward" denotes a direction on opposite to that.

In Fig. 1, a seat-mounted occupant restraining apparatus of this embodiment is constructed of a backrest portion 1B of a seat 1 on which an occupant 2 shown in Fig. 3 is seated, a plurality of airbags (two pieces in this embodiment) 11a, 11b, an inflator 13 for supplying gas (pressurized fluid) in common to these two airbags 11a, 11b, an introduction tube passage 12 in which gas supply holes 15a, 15b (supply priority setting means) are formed, the gas supply holes 15a, 15b setting the priority of gas supply to the two airbags 11a, 11b by the inflator 13.

The seat 1 has a seated portion 1A, and from the seated portion 1A a backrest portion 1B projects upward. In the top portion of the backrest portion 1B, there is installed a headrest 1C (refer to Fig. 2) on an introduction tube passage 12 (described later) via a support portion (not shown).

In the backrest portion 1B, an airbag device 10 (refer to Fig. 2) is installed that serves for restraining the side portions of the breast portion 2A and the waist portion 2B, or the side portions of the head portion of the occupant 2 at an occasion of a lateral overturn of a vehicle body or the like due to an accident.

The airbag device 10 is provided with an airbag 11 constituted of a pair of side airbags 11a, 11b, which are each composed of a bag body (refer to Fig. 5) formed by joining two sheets of base fabrics 35 flatly overlaid by sewing together and are installed inside the backrest portion of the seat 1 on its sidewall side of the vehicle body (left side in Fig. 2) and on its inner side of the vehicle cabin (right side in Fig. 2), respectively, so as to extend from the sides of the breast portion 2A and/or the waist portion 2B of the occupant 2 when inflated, retainers (not shown) which are each formed at an airbag installation portion M, described later, of the introduction tube passage integrally with unshown upper and lower guide members, and in which the airbag 11 is accommodated in a state of being folded, one inflator 13 (refer to Fig. 1 and Fig. 2) for supplying gas with which the airbag 11 is inflated and extends, and the introduction tube passage 12 which is provided with the inflator 13 at one end and introduces the gas to each of the side airbags 11a, 11b; the one inflator 13 and the introduction tube passage 12 constitute a gas supply means.

On the other hand, the seat 1 is constructed to be frame-like forming a framework of the seat 1 from side plates 14A, 14B, a cross member 14C (refer to Fig. 1), and the like, and the introduction tube passage 12 is bent in a substantially U-shape and is held inside the frame.

The seated portion 1A and the backrest portion 1B of the seat 1 are each covered with a fabric top-cover material on the whole, and on the surface of a portion (not shown) of the fabric top-cover material, which covers the backrest portion 1B, there is formed a tear line (ruptured portion) on each of its both side surfaces, the tear line being formed with a perforation means or the like and more tearable with respect to the other parts.

It is noted that, although not shown, an automobile equipped with the airbag device 10 is provided with various types of sensors detecting an occurrence of a collision (or prediction of an occurrence) (including a lateral collision or the like) or lateral overturn when such an accident occurs on the automobile. And, an inflator controlling circuit (not shown) activates an initiator (not shown) of the inflator 13 according to a detection signal from the sensors.

The both side airbags 11a, 11b are accommodated inside the retainers (not shown) in a state of being folded, respectively, at a normal time. On the other hand, for example, at an occasion of a collision or a lateral overturn of an automobile described above, the sensors detect it and an activation signal is input from the inflator controlling circuit to the initiator of the inflator 13 to activate the initiator; thereby, as shown in Fig. 2 to Fig. 4, each of extension portions of the airbag 11 is inflated and extends between a side of the inside of the automobile and a side of the occupant 2 and/or a side of an occupant 2 riding adjacent to the side of this occupant 2. At this time, the airbag 11 ruptures the tear line (not shown) formed on the fabric top-cover material on the both sides of the backrest portion 1B, and is inflated to the outside to extend to both sides of the occupant 2.

It is noted that the initiator (not shown) of the inflator 13 and the inflator controlling circuit (not shown) are connected by an unshown cable, the ignition control of the inflator 13 is performed through the cable.

And, due to workings of a forwardly extending portion (not shown) of the airbag 11, the airbag 11 is inflated so as to pinch both sides of the occupant 2 and restrains the both sides of the body of the occupant 2; thereby a burden to the breast portion 2A and/or the waist portion 2B is enabled to be reduced.

In these Fig. 1 and Fig. 2, the introduction tube passage 12 is a pipe bent in an inverted U-shape, the pipe being made of, for example, metal. The both lower ends of the introduction tube passage 12 are secured to the pair of side plates 14A, 14B, which are provided in the backrest portion 1B of the seat 1 on the both sides thereof in a vehicle width direction, by clamp bands 18a made of, for example, metal at upper and lower two positions, respectively. Likewise, the inflator 13 provided in the lower end on one side (left side in a vehicle width direction in this embodiment; right side in Fig. 1, Fig. 2 and Fig. 4) of the introduction tube passage 12 is also secured to the inner side of the side plate 14B on one side by clamp bands 18a made of metal at upper and lower two positions.

And, the cross members 14C, 14C provided so as to extend substantially along a vehicle width direction are connected between the side plates 14A, 14B, and all of these are installed in the backrest portion 1B of the seat 1.

As shown in Fig. 5 and Fig. 6, on the both sides of the introduction tube passage 12 configured in a U-shape, there are provided the airbag installation portions M for installing the side airbags 11a, 11b at positions in a predetermined level, and gas supply holes 15a, 15b are drilled in the airbag installation portions M, the gas supply holes 15a, 15b becoming a plurality of opening portions (orifices) OF.

The side airbags 11a, 11b are installed to the gas supply holes 15a, 15b in a state such that gas introduction ports 20 (described later) of the side airbags 11a, 11b are brought into correspondence therewith, respectively, using an installation member 31, described later, and pressurized gas from the inflator 13 is introduced from the gas supply holes 15a, 15b to the side airbags 11a, 11b via the gas introduction ports 20, respectively.

The installation member 31 is constituted of a pair of installation plates 31A, 31B, which serve to install each of the side airbags 11a, 11b to the introduction tube passage 12 as shown in Fig. 5 and Fig. 6, and each of the installation plates 31A, 31B has a semicircular fit-in concave portion in its middle for serving to sandwich the introduction tube passage 12, and is provided with flanges F on its both sides, the flanges F being provided with four installation holes 22; a gas supply long hole 16 for supplying gas is formed in the center of the fit-in concave portion of the installation plate 31A on one side in correspondence to each of the gas supply holes 15a, 15b.

Then, when the side airbag 11a on the sidewall side of the vehicle body is installed to one side end of the introduction tube passage 12, the installation plate 31A on one side is first inserted inside the side airbags 11a, and the introduction tube passage 12 is inserted into the fit-in concave portions of the installation plate 31A and the installation plate 31B, in a state of bringing the gas supply long hole 16 of the installation plate 31A into correspondence with the gas introduction port 20 in the conditions and also in a state of bringing the gas introduction port 20 into correspondence with the gas supply holes 15a of the introduction tube passage 12; then, four installation bolts B are inserted through the installation holes 22 of the both flanges F and installation holes 34 (refer to Fig. 6) of the base fabric 35 on one side, and the both installation plates 31A, 31B are fastened together.

Likewise, the side airbag 11b on the inner side of the vehicle cabin is installed to the other side end of the introduction tube passage 12. The both side airbags 11a, 11b are thus each accommodated in the retainer (not shown) of the airbag installation portion M of the introduction tube passage 12 in a state of being folded.

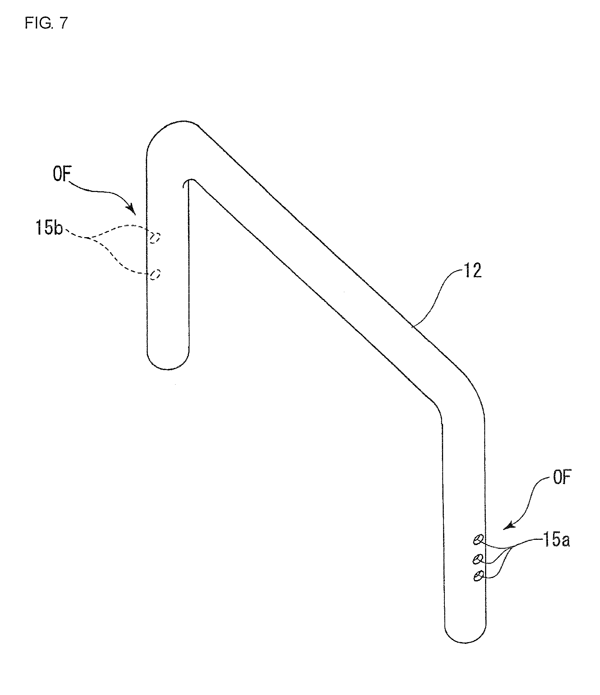

Next, the supply priority setting means, which is an essential portion of the present invention, will be described. Fig. 7 is a perspective view of the introduction tube passage provided with gas supply holes in its both end portions, the gas supply holes serving as supply priority setting means.

In Fig. 7, in the both side ends of the introduction tube passage 12 formed by being bent in an inverted U-shape, there are opened the plurality of gas supply holes 15a, 15b, which have an identical diameter and constitute a plurality of orifices OF serving as the supply priority setting means, and the side airbag 11a on the sidewall side of the vehicle body is mounted in correspondence to the three gas supply holes 15a formed in one side end of the introduction tube passage 12 and the side airbag 11b on the inner side of the vehicle cabin is mounted in correspondence to the two gas supply holes 15b formed in the other side end of the introduction tube passage 12, where the inflator 13 is installed, as shown also in Fig. 4 and Fig. 6; thereby the gas at the time of inflation is allowed to be supplied to each of the side airbags in accordance with the priority in descending order of the number of the gas supply holes.

In the seat-mounted occupant restraining apparatus of this embodiment having the configuration described above, when gas is supplied from the inflator 13 to the introduction tube passage 12 caused by activation of the initiator, the side airbag 11a on the sidewall side of the vehicle body is inflated prior to the side airbag 11b on the inner side of the vehicle cabin by the gas introduced on a higher priority from the gas supply holes 15a having a larger number of holes relative to the gas supply holes 15b having a smaller number of holes. With this, it becomes possible that the side airbag 11a on the sidewall side of the vehicle body, which is inflated in a higher priority order, effectively absorbs an inertial force applied to the occupant 2, while preventing a secondary collision of the occupant 2 to the sidewall side of the vehicle body, and the side airbag 11b on the inner side of the vehicle cabin, which is inflated with a delay, prevents the occupant 2 from coming into a tertiary collision with decorative goods in the vehicle cabin.

As described above, according to this embodiment, a configuration can be realized that a plurality of side airbags 11a, 11b are inflated to the side portions of the occupant 2 in accordance with a priority order by providing the gas supply holes 15a, 15b having different numbers of holes in the introduction tube passage 12. Therefore, the gas supply means can be simplified.

In addition, this embodiment is particularly configured such that gas from one inflator 13 is introduced into the plurality of side airbags 11a, 11b using the introduction tube passage 12. With this, in comparison with a configuration such that a plurality airbags are inflated by being supplied with gas from a plurality of inflators, it becomes possible to simplify the configuration, while facilitating size reduction, weight reduction and cost reduction of the apparatus.

Moreover, the introduction tube passage 12 is particularly substantially U-shaped in this embodiment. With this, the introduction tube passage 12 can also serve as a strength support member for the backrest portion 1B by being accommodated in the backrest portion 1B of the seat 1.

It is noted that, although, in the above description, the gas supply holes 15a, 15b each serving as supply priority setting means are configured so that the flow quantity of gas is regulated by changing the number of the gas supply holes having an identical diameter, it is also possible to regulate the flow quantity of gas by changing the size of the gas supply holes.

Furthermore, the supply priority setting means is not limited to the gas supply holes 15a, 15b in the above embodiment, and may be practiced in various other forms not departing from the spirit and scope thereof.

In the Fig. 1 and Fig. 2, for example, a throttling means is illustrated with a long dashed double short dashed line as a first transformed example. The throttle valve MV serving as a throttling means is provided in a middle portion atop the introduction tube passage 12 bent in an inverted U-shape. The throttle valve MV restricts gas flow by draw forming the outer diameter of the introduction tube passage 12 and by reducing the inner diameter of the tube passage to a predetermined pipe diameter. With this, it is possible to configure such that the side airbag 11a installed to the introduction tube passage 12 to be positioned frontward of the throttle valve MV with respect to the inflator 13 is inflated on a higher priority to the side airbag 11a installed to be positioned rearward of the throttle valve MV. This transformed example is effectively applied to the case that the side airbag 11b is to be inflated on a higher priority to the side airbag 11a, in difference to the embodiment described above.

Additionally, in Fig. 4, a check valve CV is illustrated with a long dashed double short dashed line as a second transformed example. The check valve CV is provided in a middle portion atop the introduction tube passage 12 bent in an inverted U-shape. Then, when gas is supplied from the inflator 13 to the introduction tube passage 12, since the gas having passed through the check valve CV is prevented from flowing back through the check valve CV, the internal pressure of the side airbag 11a installed to one side end of the introduction tube passage 12 is maintained. With this, the side airbag 11a installed to the introduction tube passage 12 to be positioned rearward of the check valve CV with respect to the inflator 13 is allowed to be inflated with having a difference in internal pressure so that the its internal pressure is higher than that of the side airbag 11b installed to be positioned frontward of the check valve CV.

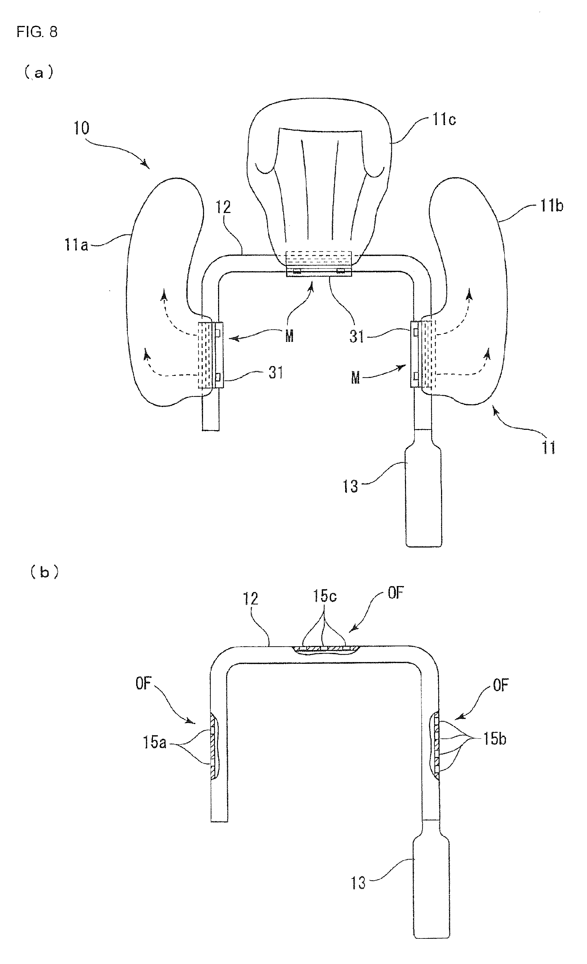

Figs. 8 show a seat-mounted occupant restraining apparatus according to another embodiment of the present invention; Fig. 8(a) is an elevation view of an airbag device having three airbags mounted to the introduction tube passage, and Fig. 8(b) is an elevation view of the introduction tube passage in which gas supply holes are formed to be different in number according to priority corresponding to the three airbags.

In Figs. 8, gas supply holes 15b, 15c, 15a having an identical diameter are formed as supply priority setting means in an introduction tube passage 12 in the order from the side of an inflator 13 toward its tip; the first gas supply holes 15b are constituted of four opening portions, the next gas supply holes 15c are constituted of three opening portions, and the last gas supply holes 15a are constituted of two opening portions.

Like this, it becomes possible that three side airbags 11b, 11c, 11a installed in correspondence to gas supply holes 15b, 15c, 15a are inflated in accordance with priority sequentially from the side of the inflator 13 at a timing earlier than that on the tip side of the introduction tube passage 12 by providing the gas supply holes 15b, 15c, 15a in the order according to the number of opening holes descending from the maximum number of opening holes on the side of the inflator 13. This embodiment is effectively applied to the case that the side airbag 11b is to be inflated on a higher priority to the side airbag 11a, in difference to the embodiment described above.

In the other embodiments described above, advantages similar to the aforementioned embodiment can be obtained.

It is noted that, although examples of application of the present invention to side airbags extending to the sides of the head portion and the breast portion of an occupant, the application of the present invention is not limited to these, but may be applied to other restraining devices, for example, such as a roof airbag extending to the above of the head portion of an occupant, or the like.

The specific configurations of respective embodiments described above do not precisely limit the content of the present invention. It is possible to configure the above supply priority setting means by combining gas supply holes 15a, 15b serving as opening portions (orifices) OF, a throttle valve MV serving as a throttling means, or a check valve CV with one introduction tube passage 12, and it is needless to say that details can be modified variously along the spirit of the present invention.

## Claims

1. A seat-mounted occupant restraining apparatus comprising:
a backrest portion;
a plurality of airbags each provided in the backrest portion so as to extend at least to substantially peripheral portions of an occupant when inflated, the peripheral portions including at least side portions of an occupant;
a gas supply means for supplying pressurized fluid in common to the plurality of airbags; and
a supply priority setting means for setting priorities for supplying the pressurized fluid to the plurality of airbags through the gas supply means.

2. The seat-mounted occupant restraining apparatus according to Claim 1,
wherein the gas supply means is provided with one inflator, and an introduction tube passage for introducing the pressurized fluid from this inflator to the plurality of airbags.

3. The seat-mounted occupant restraining apparatus according to Claim 2,
wherein the introduction tube passage is substantially U-shaped.

4. The seat-mounted occupant restraining apparatus according to Claim 2 or 3,
wherein the supply priority setting means is a check valve provided in the introduction tube passage.

5. The seat-mounted occupant restraining apparatus according to Claim 2 or 3,
wherein the supply priority setting means is a throttling means provided in the introduction tube passage.

6. The seat-mounted occupant restraining apparatus according to Claim 2 or 3,
wherein the supply priority setting means is a plurality of opening portions, the number or size of each of which is different to each other so as to regulate the supply quantity of the pressurized fluid for each of the plurality of airbags, the opening portions being provided in the introduction tube passage in correspondence to the respective airbags.
